# EUROPÄISCHE PATENTSCHRIFT

(11) **EP 2 145 535 B1**
(45) Veröffentlichungstag und Bekanntmachung des Hinweises auf die Patenterteilung: **20.05.2015**
(21) Anmeldenummer: 09009067.1
(22) Anmeldetag: 10.07.2009
(51) Int. Cl.: A01K 63/04, B01D 19/04, C02F 1/52, C02F 1/66

(54) **Verfahren zum Klären von in einem Schaumsammelraum eines Abschäumers gesammeltem Schaum**
Method of clearing foam from collected foam in a foam remover
Procédé d'épuration de mousse accumulée dans une chambre de collecte

(30) Priorität: 17.07.2008 DE 102008033529
(43) Veröffentlichungstag der Anmeldung: 20.01.2010
(73) Patentinhaber: ERWIN SANDER ELEKTROAPPARATEBAU GMBH, 31311 Uetze-Eltze (DE)
(72) Erfinder: Sander, Martin, 31311 Uetze-Eltze (DE)
(74) Vertreter: Rehmann, Thorsten

(56) Entgegenhaltungen:
- WO-A2-2007/029256
- CN-A- 101 279 787
- DE-C1- 4 416 587
- US-A1- 2006 231 472
- US-B1- 6 960 304
- DATABASE WPI Week 198015 Thomson Scientific, London, GB; AN 1980-26316C XP002545101 & JP 55 028764 A (DAIICHI KASEI SANGYO KK) 29. Februar 1980 (1980-02-29)

## Beschreibung

Die Erfindung betrifft ein Verfahren zum Klären von in einem Schaumsammelraum eines in Aquarium- und Aquakulturkreisläufen eingesetzten Abschäumers gesammeltem Schaum.

Abschäumer bzw. Eiweißabschäumer werden bekannterweise in Aquarien- und Aquakulturkreisläufen eingesetzt, in denen das darin enthaltene Wasser stetig umgewälzt und gereinigt werden muss. Dabei müssen insbesondere organische Substanzen, wie beispielsweise Fischfutterreste oder Fischkot, entfernt werden.

Beim Einsatz eines Abschäumers wird die besondere Affinität dieser organischen Substanz insbesondere von eiweißhaltiger organischer Substanz zur Anlagerung an Luftblasen benutzt. Dabei werden in das zu reinigende Wasser feinperlige Luftblasen eingeleitet. An diesen lagern sich die organischen Substanzen an und werden mit diesen Luftblasen an die Wasseroberfläche befördert.

Nach dem Erreichen des Wasserspiegels bildet sich aus dem Konglomerat aus Luftblasen, Organik und Schmutzfracht ein Schmutzschaum, der durch ein Schaumrohr in einen Schaumsammelraum ausgetragen wird. Hier gibt es ein Spülsystem, welches den Schaum in Form von Schaumwasser aus dem Schaumsammelraum austrägt.
Nachteilig ist, dass mit dem austretenden Schaum stetig etwas Wasser aus dem Aquarien- bzw. Aquakulturkreislauf ausgetragen wird. Die Verlustmenge liegt in der Größenordnung von 5 - 30 Prozent des Systemvolumens pro Tag.

Insbesondere bei Salzwasserkreisläufen, aber auch im Süßwasserbereich, sind mit diesem Wasserverlust zum Teil erhebliche Kosten verbunden. Diese Kosten ergeben sich beispielsweise aus den Kosten für Wasser, Abwasser, Energie und Salzanteil.

Aus der DE 44 16 587 C1 ist eine Einrichtung zum Reinigen eines Schaumrohres eines Abschäumers bekannt. Dabei wird die Innenwand des Schaumrohres mit Wasser gespült, wodurch verhindert wird, dass sich Proteine absetzen, die die Funktionsfähigkeit des Abschäumers beeinträchtigen können. Der im Schaumsammelbehälter des Abschäumers gesammelte Schaum wird jedoch über eine Leitung in das Abwassernetz abgeleitet oder auf sonstige Weise entsorgt. Auch hier wird folglich eine erhebliche Menge Wasser aus dem Aquakulturkreislauf ausgetragen.

Aus der CN 101 279 787 ist ein Verfahren bekannt, mit dem beispielsweise Tenside aus einem Abwasser wiedergewonnen werden können. Dadurch werden die Kosten für die Entsorgung des Abwassers reduziert und Energie eingespart. Der große Wasserverlust durch austretenden Schaum kann jedoch auch im in dieser Druckschrift beschriebenen Verfahren nicht verhindert werden.

Die JP 55 028764 offenbart ein Verfahren zum Ausfällen von Proteinen aus Feuerlöschschaumwasser.

Aus der US 6,960,304 B1 ist bekannt, dass über die Zugabe von Dosiermitteln auch Eiweiß aus einem Abwasser ausgefällt werden kann.

Die US 2006/231472 A1 offenbart eine Abwasserbehandlungseinrichtung, mit der Abwasser von der hochgiftigen Flusssäure gereinigt werden kann. Bei einer solchen Reinigung entsteht kein Schaum.

Von dieser Problemstellung ausgehend soll das gattungsgemäße Verfahren zum Klären von Schaum dahingehend verbessert werden, dass weniger Abwasser entsteht.

Erfindungsgemäß wird das Problem bei einem gattungsgemäßen Verfahren mit den folgenden Schritten gelöst:
a) Ausspülen des Schaumsammelraumes mit Wasser,
b) Ableiten des Schaumes in Form von Schaumwasser aus dem Schaumsammelraum,
c) Sammeln des Schaumwassers in einem Sedimentationsbehälter,
d) Ausfällen organischer Substanzen aus dem Schaumwasser durch Zugabe eines Dosiermittels,
e) Ableiten von gereinigtem Wasser aus dem Sedimentationsbehälter.

Anstatt den aus dem Abschäumer abgeleiteten Schaum aus dem Aquakulturkreislauf auszutragen und beispielsweise dem Abwasser zuzuführen, wird er in einem Sedimentationsbehälter gesammelt. Durch die Zugabe des Dosiermittels wird ein Teil der Schmutzfracht, insbesondere des eiweißhaltigen Organikanteils, spontan ausgefällt. Diese hat eine von reinem Wasser unterschiedliche Dichte. Ein Großteil der ausgeflockten Substanz ist dichter als Wasser und setzt sich daher innerhalb kurzer Zeit am Boden des Sedimentationsbehälters ab. Dieses Schlammkonzentrat wird anschließend zur Schlammbehandlung bzw. ins Abwasser abgeleitet.

Ein kleinerer Teil der ausgeflockten Substanz ist weniger dicht als das Wasser und steigt als Schwimmschlamm an die Oberfläche des Sedimentationsbehälters auf.

Zwischen dem Schwimmschlamm an der Oberfläche und dem Schlammkonzentrat am Boden des Sedimentationsbehälters kann nun gereinigtes Wasser entnommen und gegebenenfalls dem Kreislauf wieder zugeführt werden. Mit diesem Verfahren wird die Verkehrsmenge an Wasser in dem Bereich von etwa 1% des Systemvolumens pro Tag reduziert.

Vorzugsweise wird das Schaumwasser vor dem Sammeln in dem Sedimentationsbehälter in einem Kondensationsbehälter gesammelt, in dem zumindest ein Teil des Schaumes kondensiert.

Auf diese Weise wird der Wasseranteil des Schaumwassers deutlich erhöht, sodass bei der späteren Sammlung im Sedimentationsbehälter einfacher ein Dosiermittel zugeführt werden kann.

Vorzugsweise wird zum Spülen des Schaumsammelraumes das Schaumwasser aus dem Kondensationsbehälter verwendet. Auf diese Weise wird der benötigte Frischwasseranteil der Anlage deutlich reduziert, was das Verfahren deutlich umweltverträglicher macht und die Betriebskosten senkt. Der Organikanteil im Schaumwasser reichert sich auf diese Weise jedoch stetig an.

Vorzugsweise wird das Dosiermittel im Sedimentationsbehälter mit dem Schaumwasser innig vermischt. Auf diese Weise ist gewährleistet, dass möglichst viel im Schaumwasser enthaltene organische Substanz ausfällt. Dadurch wird das Verfahren beschleunigt, was die Effizienz steigert und die Verfahrenskosten senkt.

Bevorzugt wird als Dosiermittel ein alkalisches Mittel, insbesondere Kalkmilch oder Natronlauge verwendet. Bei der Auswahl des Dosiermittels, das für die Fällung verwendet wird, ist es von besonderer Bedeutung, dass ein Mittel verwendet wird, welches bei eventuell nicht vermeidbarer Verschleppung in den Hauptkreislauf dort keine schädigende Wirkung ausübt. Hier haben sich insbesondere alkalische Mittel wie Kalkmilch oder Natronlauge bewährt.

In aller Regel haben Aquariensysteme und Fischaufzuchtanlagen aufgrund der biologischen Stoffwechselverhältnisse durch die Atmung der Fische und der Mikrobiologie mit einem zu niedrigen pH-Wert zu kämpfen. Gelangt ein alkalisches Dosiermittel durch eine Verschleppung in den Hauptkreislauf des Aquakultursystems, beispielsweise in ein Fischaufzuchtbecken, führt dieses Dosiermittel zu einer Stabilisierung des pH-Wertes, wodurch die Zufuhr anderer pH-stabilisierender Mittel verringert werden kann. Zu einer Verschleppung des Dosiermittels kommt es immer dann, wenn Dosiermittel im gereinigten Wasser vorhanden ist, das dem Sedimentationsbehälter entnommen und dem Hauptkreislauf wieder zugeführt wird.

Versuche haben ergeben, dass durch die Anwendung des erfindungsgemäßen Verfahrens der CSB-Wert im zurückgewonnenen Wasser, der ein Maß dafür ist, wie viel Sauerstoff die chemischen Faulungs- und Reinigungsprozesse im Abwasser verbrauchen, um etwa den Faktor 10 reduziert werden kann. Der verbleibende Rest-CSB-Wert liegt in der Größenordnung des CSB-Wertes des Beckenwassers einer Aquakulturanlage, sodass eine Rückleitung des zurückgewonnenen Wassers bedenkenlos möglich ist.

Vorzugsweise wird die Dosierung des Dosiermittels auf volumetrischer Basis oder pHabhängig gesteuert.

Aufgrund der hohen Qualität des zurückgewonnenen Wassers ergeben sich verfahrenstechnisch verschiedene Möglichkeiten, an welcher Stelle das durch das erfindungsgemäße Verfahren gereinigte Wasser dem Hauptkreislauf beispielsweise einer Fischaufzuchtanlage wieder zugeführt wird. So ist es möglich, das Wasser vor einem mechanischen Filter, beispielsweise Sandfilter, Trommelfilter oder Abschäumer, zuzusetzen, um ein eventuell mögliches Nach-flocken durch im gereinigten Wasser noch enthaltendes Dosiermittel in der Filtrationsstufe synergetisch zu nutzen. Auch die Zugabe vor einem aeroben biologischen Filter ist denkbar, um bei Bedarf den BSB-Wert, der Auskunft darüber gibt, wieviel Sauerstoff die im Abwasser vorhandenen Bakterien verbrauchen, weiter abzusenken. Auch vor einem anaeroben Biofilter ist die Zuführung möglich. Dort kann das Wasser gegebenenfalls anaerob weiter bearbeitet werden und/oder als Elektronendonator wirken.

Der sich am Grunde des Sedimentationsbehälters absetzende Schlammanteil ist sehr nährstoff- und energiereich. Die Verwertung in einer Biogasanlage oder die Aufbringung auf Felder zwecks Düngung sind möglich.

Eine Vorrichtung zur Ausübung des erfindungsgemäßen Verfahrens umfasst einen Abschäumer, der einen Schaumsammelraum aufweist, eine Spülvorrichtung zum Spülen des Schaumsammelraumes, eine Ableitung, über die Schaumwasser aus dem Schaumsammelraum eines Abschäumers ableitbar ist, wenn der Schaumsammelraum mit Wasser gespült wird, einen mit der Ableitung verbundenen Sedimentationsbehälter, eine Dosiermittelzuführvorrichtung, über die ein Dosiermittel dem Sedimentationsbehälter zuführbar ist, und eine Entnahmevorrichtung, über die gereinigtes Wasser dem Sedimentationsbehälter entnehmbar ist.

Vorzugsweise weist die Vorrichtung zusätzlich einen Kondensationsbehälter auf, der dem Sedimentationsbehälter vorgeschaltet ist.

Vorteilhafterweise ist die Entnahmevorrichtung als Überlauf ausgestaltet. Da der größte Teil des ausgeflockten Materials dichter ist als das umgebende Wasser, sinkt er auf den Boden des Sedimentationsbehälters ab. An der Wasseroberfläche befindet sich somit deutlich saubereres Wasser. Durch einen Überlauf kann dieses dem Sedimentationsbehälter einfach entnommen werden.

Vorteilhafterweise ist vor dem Überlauf eine Tauchwand vorgesehen. Da ein kleinerer Anteil des ausgeflockten Materials leichter ist als Wasser, schwimmt er an der Oberfläche. Durch eine Tauchwand wird vermieden, dass der schwimmende Anteil des ausgeflockten Materials in das zurückgewonnene Wasser ausgetragen wird. Das ablaufende Wasser, welches in den Hauptkreislauf zurückgeleitet wird, ist folglich weitestgehend frei von Schmutzfracht.

Alternativ kann auch die Entnahmevorrichtung als belüftetes Tauchrohr ausgebildet sein. Auf diese Weise wird das dem Sedimentationsbehälter zu entnehmende gereinigte Wasser direkt aus der Schicht entnommen, die weitgehend frei von Schmutzfracht ist. Diese befindet sich zwischen dem sich nach unten absetzenden Schlammkonzentrat und dem an der Wasseroberfläche schwimmenden Schwimmschlamm.

Mit Hilfe einer Zeichnung wird nachfolgend ein bevorzugtes Ausführungsbeispiel der Erfindung näher erläutert.

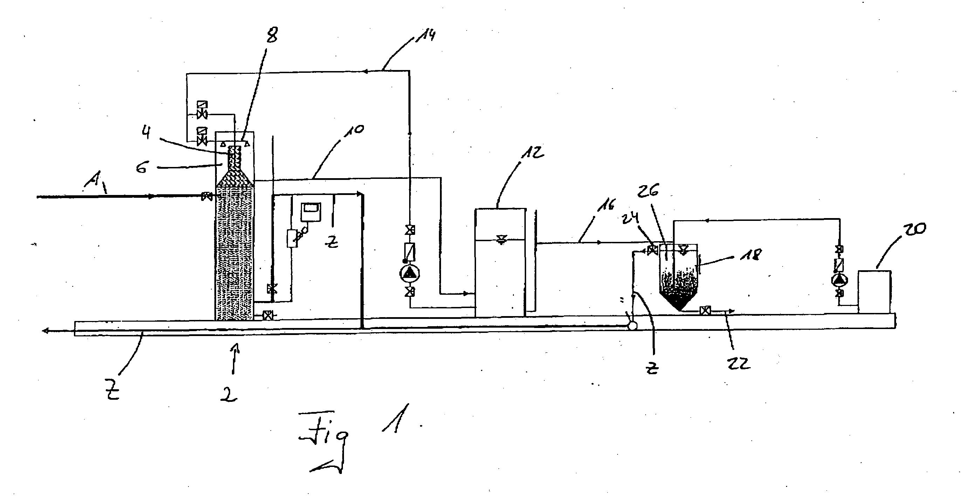

In der Figur ist eine schematische Darstellung einer erfindungsgemäßen Vorrichtung gezeigt. Zu klärendes Wasser kommt aus einer Aquakulturanlage, beispielsweise einer Fischzuchtanlage, entlang des durch den Pfeil A gekennzeichneten Weges. Es wird in einen Abschäumer 2 eingeleitet, in dem es mit feinen Luftblasen versetzt wird. Die im zu reinigenden Wasser enthaltenen organischen, insbesondere eiweißhaltigen, Substanzen lagern sich an den Luftblasen an und steigen mit diesen nach oben. Bei dem Erreichen des Wasserspiegels bildet sich dabei ein Schmutzschaum, der durch ein Schaumrohr 4 des Abschäumers 2 aufsteigt und sich in einem Schaurnsammelrawn 6 sammelt. Der Schaumsammelraum 6 wird über eine Spülvorrichtung 8 gespült, sodass der Schmutzschaum als Schaumwasser über eine Ableitung 10 aus dem Schaumsammelraum 6 abgeführt wird. Am unteren Ende des Abschäumers 2 sammelt sich dabei von organischen Substanzen weitgehend gereinigtes Wasser, dass durch die dick gezeichnete Linie der Fließrichtung Z dem Hauptkreislauf wieder zugeführt wird.

Das Schaumwasser wird, nachdem es über die Ableitung 10 aus dem Schaumsammelraum 6 abgeleitet wurde, in einem Kondensationsbehälter 12 gesammelt, Im Kondensationsbehälter 12 kondensiert zumindest ein Teil des Schaumes, sodass der Wasseranteil des Schaumwassers zunimmt. Das Wasser im Schaumwasser setzt sich aufgrund der höheren Dichte unten ab. Vom unteren Ende des Kondensationsbehälters 12 wird das Wasser dem Kondensationsbehälter 12 entnommen und über eine Spülzuführleitung 14 der Spülvorrichtung 8 zugeführt, sodass mit dem Schaumwasser die Innenwand des Schaumsanamelraums 6 gespült wird. Auf diese Weise wird der Bedarf an Frischwasser deutlich verringert.

Gleichzeitig wird dem Kondensationsbehälter 12 Schaumwasser entnommen und über eine weitere Leitung 16 einem Sedimentationsbehälter 18 zugeführt. Dem Schaum wasser wird im Sedimentationsbehälter ein Dosiermittel aus einer Dosiermittelzuruhrvomchtung 20 zugeführt.

Im Sedimentationsbehälter 18 erfolgt eine Durchmischung des Dosiermittels mit dem im Sedimentationsbehälter 18 befindlichen Schaumwasser, sodass im Schaumwasser enthaltene organische Substanzen ausgefällt werden. Der größte Teil dieser Ausflockung weist eine größere Dichte als das ihn umgebende Wasser auf, sodass er sich am Boden des Sedimentationsbehälters 18 absetzt. Dieser Schlamm wird vom Boden des Sedimentationsbehälters 18 über eine Schlammleitung 22 abgeführt. Der Schlamm kann dem Abwasser zugeführt werden oder er wird als Dünger oder in einer Biogasanlage weiterverwendet.

Ein kleinerer Teil des ausgeflockten Materials im Sedimentationsbehälter 18 weist eine geringere Dichte auf als das ihn umgebende Wasser und steigt als Schwimmschlamm an die Oberfläche. Nahe der Oberfläche des Wassers im Sedimentationsbehälter 18 wird über eine Entnahmevorrichtung 24 dem Sedimentationsbehälter 18 gereinigtes Wasser entnommen, das entlang der Fließrichtung Z dem Hauptkreislauf wieder zugeführt wird. Um zu verhindern, dass das in der Entnahmevorrichtung 24 entnommene Wasser Anteile des Schwimmschlamms enthält, ist vor der Entnahmevorrichtung 24 eine Tauchwand 26 vorgesehen. Damit ist gewährleistet, dass das dem Kreislauf wieder zugeführte Wasser weitestgehend frei von Schmutzfracht ist.

### Bezugszeichenliste

- A: Fließrichtung aus dem Hauptkreislauf
- Z: Fließrichtung zurück in den Hauptkreislauf
- 2: Abschäumer
- 4: Schaumrohr
- 6: Schaumsammelraum
- 8: Spülvorrichtung
- 10: Ableitung
- 12: Kondensationsbehälter
- 14: Spülzuführleitung
- 16: Leitung
- 18: Sedimentationsbehälter
- 20: Dosiermittelzuführvonichtung
- 22: Schlammleitung
- 24: Entnahmevorrichtung
- 26: Tauchwand

## Patentansprüche

1. Verfahren zum Klären von in einem Schaumsammelraum (6) eines in Aquarien- und Aquakulturkreisläufen eingesetzten Abschäumers (2) gesammeltem Schaum, mit den Schritten
a) Ausspülen des Schaumsammelraums (6) mit Wasser,
b) Ableiten des Schaumes in Form von Schaumwasser aus dem Schaumsammelraum (6),
c) Sammeln des Schaumwassers in einem Sedimentationsbehälter (18),
d) Ausfällen organischer Substanzen aus dem Schaumwasser durch Zugabe eines Dosiermittels,
e) Ableiten von gereinigtem Wasser aus dem Sedimentationsbehälter (18).

2. Verfahren nach Anspruch 1, **dadurch gekennzeichnet, dass** das Schaumwasser vor dem Sammeln in dem Sedimentationsbehälter (18) in einem Kondensationsbehälter (12) gesammelt wird, in dem zumindest ein Teil des Schaumes kondensiert.

3. Verfahren nach Anspruch 2, **dadurch gekennzeichnet, dass** zum Spülen des Schaumsammelraums (6) des Abschäumers (2) das Schaumwasser aus dem Kondensationsbehälter (12) verwendet wird.

4. Verfahren nach einem oder mehreren der vorstehenden Ansprüche, **dadurch gekennzeichnet, dass** das Dosiermittel im Sedimentationsbehälter (18) mit dem Schaumwasser innig vermischt wird.

5. Verfahren nach einem oder mehreren der vorstehenden Ansprüche, **dadurch gekennzeichnet, dass** als Dosiermittel ein alkalisches Mittel, insbesondere Kalkmilch oder Natronlauge, verwendet wird.

6. Verfahren nach einem oder mehreren der vorstehenden Ansprüche, **dadurch gekennzeichnet, dass** die Dosierung des Dosiermittels auf volumetrischer Basis oder pH-abhängig gesteuert wird.

## Claims

1. Method for the clarification of foam collected in a foam collection space (6) of a foam remover (2) used in aquarium and aquaculture circuits, having the steps
a) flushing-out of the foam collection space (6) with water,
b) discharge of the foam in the form of foamy water out of the foam collection space (6),
c) collection of the foamy water in a sedimentation tank (18),
d) precipitation of organic substances out of the foamy water by the addition of a metered agent,
e) discharge of purified water out of the sedimentation tank (18).

2. Method according to Claim 1, **characterized in that** the foamy water, before collection in the sedimentation tank (18), is collected in a condensation tank (12) in which at least part of the foam condenses.

3. Method according to Claim 2, **characterized in that** the foamy water from the condensation tank (12) is used for flushing the foam collection space (6) of the foam remover (2).

4. Method according to one or more of the preceding claims, **characterized in that** the metered agent is mixed intimately with the foamy water in the sedimentation tank (18).

5. Method according to one or more of the preceding claims, **characterized in that** the metered agent used is an alkaline agent, in particular milk of lime or sodium hydroxide solution.

6. Method according to one or more of the preceding claims, **characterized in that** the metering of the metered agent is controlled on a volumetric basis or as a function of the pH value.

## Revendications

1. Procédé d'épuration de mousse collectée dans une chambre de collecte de mousse (6) d'un écumeur (2) placé dans des circuits d'aquarium et des circuits d'aquaculture, comprenant les étapes suivantes :
a) Rincer la chambre de collecte de mousse (6) avec de l'eau,
b) Evacuer la mousse sous forme d'eau mousseuse hors de la chambre de collecte de mousse (6),
c) Collecter l'eau mousseuse dans une cuve de sédimentation (18),
d) Précipiter des substances organiques de l'eau mousseuse par l'ajout d'un agent de dosage,
e) Evacuer l'eau purifiée hors de la cuve de sédimentation (18).

2. Procédé selon la revendication 1, **caractérisé en ce qu'**avant sa collecte dans la cuve de sédimentation (18) l'eau mousseuse est collectée dans une cuve de condensation (12), dans laquelle au moins une partie de la mousse condense.

3. Procédé selon la revendication 2, **caractérisé en ce que** l'eau mousseuse provenant de la cuve de condensation (12) est utilisée pour rincer la chambre de collecte de mousse (6) de l'écumeur (2).

4. Procédé selon l'une ou plusieurs des revendications précédentes, **caractérisé en ce que** l'agent de dosage est intimement mélangé avec l'eau mousseuse dans la cuve de sédimentation (18).

5. Procédé selon l'une ou plusieurs des revendications précédentes, **caractérisé en ce qu'**un agent alcalin, en particulier du lait de chaux ou une solution d'hydroxyde de sodium, est utilisé comme agent de dosage.

6. Procédé selon l'une ou plusieurs des revendications précédentes, **caractérisé en ce que** le dosage de l'agent de dosage est piloté sur une base volumétrique, ou en fonction du pH.
